# EUROPEAN PATENT SPECIFICATION

(11) **EP 3 503 677 B1**
(45) Date of publication and mention of the grant of the patent: **18.03.2020**
(21) Application number: 18207526.7
(22) Date of filing: 21.11.2018
(51) Int. Cl.: H05B 6/14, D06B 23/02, H02K 9/14

(54) **YARN HEATER AND SPUN YARN DRAWING APPARATUS**
GARNHEIZER UND ZIEHVORRICHTUNG FÜR GESPONNENE GARNE
DISPOSITIF DE CHAUFFAGE DE FIL ET APPAREIL D'ÉTIRAGE DE FIL FILÉ

(30) Priority: 21.12.2017 JP 2017244694
(43) Date of publication of application: 26.06.2019
(73) Proprietor: TMT Machinery, Inc., Osaka-shi, Osaka 541-0041 (JP)
(72) Inventor: Inoue, Ryo, Kyoto-shi, Kyoto 612-8686 (JP); Sawada, Jun, Kyoto-shi, Kyoto 612-8686 (JP)
(74) Representative: Hoffmann Eitle

(56) References cited:
- EP-A1- 0 424 867
- EP-A2- 1 126 061
- GB-A- 1 586 497

## Description

### BACKGROUND OF THE INVENTION

The present invention relates to a yarn heater and a spun yarn drawing apparatus including the yarn heater.

JP 2014-5555 A recites a spun yarn drawing apparatus configured to heat and draw yarns spun out from a spinning apparatus. The spun yarn drawing apparatus includes godet rollers (hereinafter, heating rollers) which heat yarns and send the yarns to the downstream side in the yarn running direction. The heating rollers have roller surfaces set at predetermined temperatures, and are rotationally driven by motors.

An example of the heating roller is an induction heating roller recited in JP H7-218130 A. The induction heating roller includes a roller main body and a heater which is provided inside the roller main body and has a coil. The induction heating roller is lined up with the drive shaft of a motor in the axial direction so as to be attached to the motor. As a high-frequency current is supplied to the coil, the roller surface is heated by induction heating.

An example of the motor rotationally driving the heating roller recited in JP 2014-5555 A and JP H7-218130 A is a motor disclosed in JP 2016-116272 A, which has a cooling fan in order to restrain temperature increase due to heat conduction from the heating roller, self-heating, etc. To be more specific, the motor includes: a fan which is attached to the drive shaft and is provided on the side opposite to the leading end of the drive shaft; and a fan cover which guides cooling wind generated by the fan along the surface of the motor housing. With this, the motor housing is cooled by the cooling wind, and hence the temperature increase of the motor is restrained.

EP 0 424 867 A1 discloses a yarn heater according to the preamble of claim 1.

### SUMMARY OF THE INVENTION

In the motor recited in JP 2016-116272 A, the cooling wind flowing along the surface of the housing of the motor flows toward the leading end of the drive shaft, i.e., toward the heating roller side. On this account, when such a roller is used as the heating roller of JP 2014-5555 A and JP H7-218130 A, the heating roller is disadvantageously cooled by the cooling wind. As a result, more current is required by the heater to maintain the heating roller at the predetermined set temperature, and hence the power consumption is increased. In particular, because motors have recently been made highly efficient (i.e., heat loss is restrained to be small and self-heating of the motor is restrained to be small), the cooling wind is less likely to be heated by the housing. On this account, cooling wind which is cooler than the conventional cooling wind flows toward the heating roller side. Because the heating roller is cooled more and the power consumption of the heater is increased as compared to conventional cases, decrease in power consumption of the motor thanks to increase in efficiency is disadvantageously canceled out.

Meanwhile, even if, for example, the fan, etc. are arranged to reverse the direction of the flow of the cooling wind, the heating roller may be disadvantageously cooled as part of air sucked by the motor to generate the cooling wind flows in the vicinity of the heating roller. Furthermore, because part of the air sucked by the motor is heated by the heating roller, the temperature of the generated cooling wind may be increased, and the efficiency of cooling the motor may be deteriorated.

GB 1 586 497 A is related to the preamble of claim 1, and EP 0 424 867 A1 and EP 1 126 061 A2 describe similar apparatuses.

An object of the present invention is to restrain increase in power consumption of a heater due to cooling wind for cooling a motor.

This object is solved by the subject-matter of claim 1. Preferred embodiments are described in the further claims.

According to the invention, a yarn heater includes: a heating roller which includes a roller main body and a heater provided in the roller main body to heat the roller main body, and which is configured to heat yarns; a motor which is configured to rotationally drive the heating roller; a fan which rotates so as to generate cooling wind for cooling the motor; and a wind shield member which prevents an airflow generated in accordance with generation of the cooling wind from flowing toward the heating roller; wherein, the heating roller is lined up with the motor in a direction of a drive shaft of the motor and is attached to the motor ,the fan generates the cooling wind which flows from the motor side toward the heating roller side in the direction of the drive shaft, the wind shield member is provided between the fan and the heating roller in the direction of the drive shaft to block the flow of the cooling wind after the cooling wind cools the motor, the motor is attached to a motor mounting portion in which an insertion hole in which the motor is inserted is formed, the fan and the heating roller oppose each other across the motor mounting portion, a first gap is formed between the motor and the inner circumferential surface of the insertion hole, and the wind shield member is provided to close the first gap.

The wind shield member prevents an airflow generated in accordance with the generation of the cooling wind (i.e., air sucked into the fan and an airflow generated by the cooling wind exhausted from the fan) from hitting the heating roller. Because the cooling of the heating roller by the airflow is restrained, it is possible to restrain the heater from being additionally driven to maintain the heating roller at the predetermined temperature. Increase in power consumption of the heater due to cooling wind for cooling the motor can therefore be restrained.

In an arrangement in which cooling wind flows from the motor side to the heating roller side, i.e., a strong airflow runs toward the heating roller side, the heating roller tends to be cooled upon being hit with the cooling wind. According to the aspect, because the wind shield member obstructs the flow of the cooling wind after cooling the motor, it is possible to effectively restrain the temperature of the heating roller from being lowered.

When the fan and the heating roller oppose each other across the motor mounting portion in the drive shaft direction, most of the cooling wind is blocked by the motor mounting portion and does not hit the heating roller. However, when a gap is formed between the motor and the inner circumferential surface of the insertion hole and gas leaks through the gap, the heating roller may be cooled by leaked cooling wind. Because in the aspect the gap is closed by the wind shield member, blocking of the cooling wind is ensured and cooling of the heating roller is certainly restrained.

The yarn heater may be arranged such that the motor mounting portion includes an attaching plate in which the insertion hole is formed, an attaching flange is provided between the attaching plate and the heating roller in the direction of the drive shaft and is attached to the attaching plate, and the motor is attached to the attaching plate via the attaching flange.

The motor may be attached to the attaching plate via the attaching flange. For this reason, as a suitable attaching flange is selected in accordance with size and/or shape of the motor, the motor can be attached to the attaching plate without replacing the attaching plate, when the motor is attached or replaced.

The yarn heater may be arranged such that the motor is attached to the attaching flange with an anti-vibration member being interposed between the motor and the attaching flange.

Accordingly, because vibration of the motor is attenuated by the anti-vibration member, propagation of vibration of the motor to the attaching plate via the attaching flange is restrained. Generation of noise, etc. is therefore restrained.

The yarn heater may be arranged such that the motor is connected to the attaching flange via a connecting tool which penetrates the attaching flange in the direction of the drive shaft, and the anti-vibration member is interposed between the motor and the attaching flange in the direction of the drive shaft.

Because the connecting tool penetrates the attaching flange in the drive shaft direction to connect the motor to the attaching flange, the attaching flange is easily processed as compared to cases where, for example, the connecting tool is provided to extend in the radial direction of the attaching flange. Furthermore, because the anti-vibration member is interposed between the motor and the attaching flange in the drive shaft direction, the manufacturing is easy as compared to cases where, for example, the anti-vibration member is interposed in the radial direction.

The yarn heater may be arranged such that a through hole is formed in the attaching flange to penetrate the attaching flange in the direction of the drive shaft, the motor includes a heater mounting portion which is inserted into the through hole, the heater of the heating roller being attached to the heater mounting portion, and a second gap is formed between the inner circumferential surface of the through hole and the heater mounting portion.

When the heater mounting portion is inserted into the through hole of the attaching flange, if the inner circumferential surface of the through hole makes contact with the heater mounting portion, vibration of the motor may be propagated to the attaching plate via the heater mounting portion and the attaching flange. On this account, even if the motor is attached to the attaching flange via the anti-vibration member, the anti-vibration effect of the anti-vibration member may not be obtained. On this account, the second gap must be formed between the inner circumferential surface of the through hole and the heater mounting portion in order to prevent the heater mounting portion and the attaching flange from making contact with each other. The second gap and the above-described first gap are at different locations in the drive shaft direction. For this reason, if the cooling wind passes the first gap and the second gap in order in the drive shaft direction, the cooling wind may reach the heating roller and cool the heating roller. Because the first gap is closed by the wind shield member, cooling wind is effectively blocked without requiring any dedicated measure for closing the second gap. It is therefore possible to effectively restrain the cooling wind from reaching the heating roller.

The yarn heater may be arranged such that the wind shield member is provided over the entire circumference of the insertion hole.

Because the wind shield member is provided over the entire circumference of the insertion hole, the first gap is certainly closed. Blocking of the cooling wind is therefore further ensured.

The yarn heater may be arranged such that the wind shield member is dividable into plural pieces in the circumferential direction of the insertion hole.

For example, when the motor and/or the heating roller have already been installed and a wind shield member is newly provided, it is necessary to temporarily detach the motor and/or the heating roller if the wind shield member provided over the entire circumference of the insertion hole is not dividable. The detachment takes labor. According to the aspect, it is unnecessary to temporarily detach the motor or the like when the wind shield member is provided, and hence the gap is easily closed by plural members.

The yarn heater may be arranged such that the wind shield member is attached to the motor mounting portion, and is shaped to extend inward in a radial direction of the insertion hole from the entire circumference of the insertion hole, the inner diameter of the wind shield member is shorter than the outer diameter of the motor, and the wind shield member is an elastic member in which a portion inside the insertion hole is warped in the axial direction of the insertion hole when the motor is inserted into the insertion hole, the elastic member closing the first gap when the motor is attached to the motor mounting portion.

When the motor is attached to the motor mounting portion, the motor is inserted into the insertion hole while the wind shield member has already been attached to the motor mounting portion. With this arrangement, as the internal portion in the radial direction of the wind shield member is warped in the axial direction of the insertion hole, the motor can be inserted. In a state in which the motor is inserted to a position where the motor is attachable to the motor mounting portion, the first gap is closed as the wind shield member elastically exerts force to return to the original shape. With this arrangement, the cooling wind is easily and certainly blocked only by inserting the motor into the insertion hole.

The yarn heater may be arranged such that, in the wind shield member, slits radially extending from an inner end portion in the radial direction are formed to be lined up in the circumferential direction of the insertion hole.

Accordingly, the wind shield member is easily warped in the axial direction as compared to cases where no slit is formed in the wind shield member. The insertion of the motor is therefore easily done when the motor is attached to the motor mounting portion.

The yarn heater may be arranged such that the fan is attached to the drive shaft of the motor.

By only attaching the fan to the drive shaft of the motor, cooling wind is generated as the fan is rotationally driven by the motor. Cost reduction or the like is therefore achieved as compared to cases where the fan is provided as a device separated from the motor.

The yarn heater may be arranged such that the motor includes: a motor housing; and a cover which covers a peripheral surface of the motor housing and guides the cooling wind along the peripheral surface of the motor housing, and the fan is provided outside the motor housing and on a side opposite to the leading end of the drive shaft in the direction of the drive shaft of the motor.

Air cleanliness in a place where the yarn heater is provided is typically not good. In such an environment, if the fan is provided in the motor housing, air with low cleanliness is continuously introduced into the motor, with the result that the life of each component in the motor may be shortened. According to the aspect, because the fan is provided outside the motor housing and cooling wind flows along the motor housing so as to cool the motor housing, the motor can be cooled even when the inside of the motor is sealed. It is therefore possible to cool the motor while restraining the deterioration of lifetime of the motor.

A spun yarn drawing apparatus comprises, as heating rollers configured to heat yarns: a low-speed roller; and a high-speed roller which is provided downstream of the low-speed roller in a yarn running direction and rotates at a higher speed than the low-speed roller, the spun yarn drawing apparatus drawing yarns between the low-speed roller and the high-speed roller, and the spun yarn drawing apparatus further comprises the yarn heater according to the invention, as a yarn heater including at least the high-speed roller.

For example, when the fan is rotationally driven by the drive shaft, the rotation speed of the fan is high when the rotation speed of the motor is high, with the result that strong cooling wind is generated and the heating roller tends to be cooled. Furthermore, in the spun yarn drawing apparatus, the heating temperature of the high-speed roller is typically higher than the heating temperature of the low-speed roller. For this reason, when the high-speed roller is cooled by the cooling wind, the temperature of the high-speed roller tends to be significantly lowered, and the power consumption of the heater may be significantly increased to compensate the temperature decrease. The wind shield member is provided for at least the motor which rotationally drives the high-speed roller. It is therefore possible to prevent strong cooling wind from hitting the high-speed roller, and to restrain cooling of the high-speed roller. Increase in power consumption of the heater can therefore be effectively restrained.

### BRIEF DESCRIPTION OF THE DRAWINGS

FIG. 1 is a schematic diagram of a spun yarn take-up machine including a spun yarn drawing apparatus of an embodiment.
FIG. 2 is a cross section taken along a line II-II in FIG. 1.
FIG. 3 is a cross section taken along a line III-III in FIG. 1.
FIG. 4 is a perspective view of an attaching plate and a motor.
Each of FIGs. 5(a) and 5(b) illustrates an attaching flange and its surroundings.
Each of FIGs. 6(a), 6(b), and 6(c) shows a shielding plate and a state in which the shielding plate is attached to the attaching plate.
FIG. 7 shows a wind shield member of a modification.
Each of FIGs. 8(a) and 8(b) shows a state in which the motor is being inserted into an insertion hole and a state in which the motor has been inserted.
FIG. 9 is a cross section of a yarn heater which is provided with a wind shield member of a modification.

### DESCRIPTION OF THE PREFERRED EMBODIMENTS

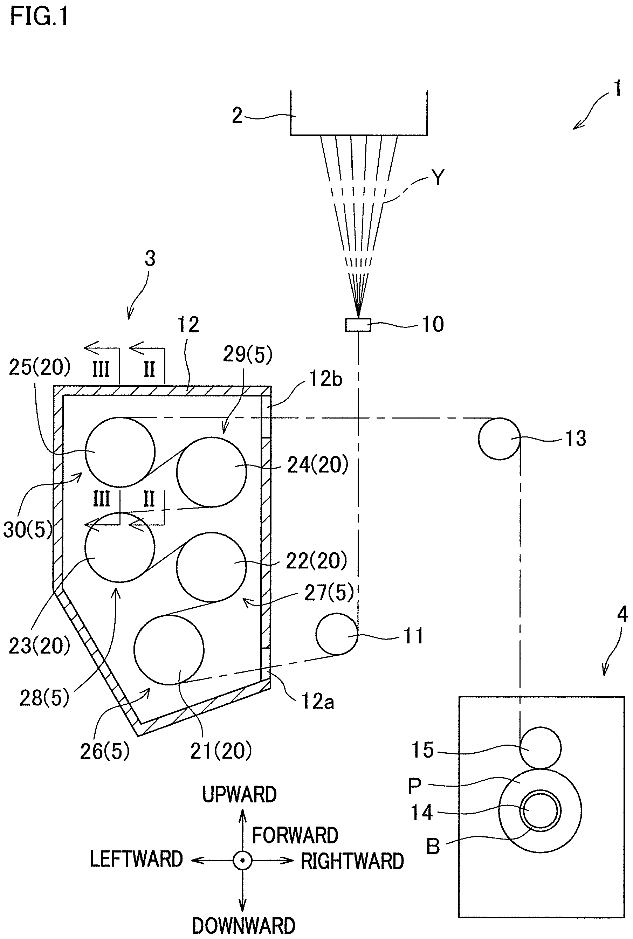

The following will describe an embodiment of the present invention with reference to FIG. 1 to FIG. 6.

### (Spun Yarn Take-Up Machine)

To begin with, the structure of a spun yarn take-up machine 1 including a spun yarn drawing apparatus 3 of the present embodiment will be described with reference to FIG. 1. FIG. 1 is a front elevation of the spun yarn take-up machine 1. The description below is given on the premise that the up-down direction, front-back direction, and left-right direction in FIG. 1 are respectively the up-down direction, front-back direction, and left-right direction relative to the spun yarn drawing apparatus 3 in the present embodiment. The spun yarn take-up machine 1 is arranged to draw yarns Y spun out from a spinning apparatus 2 by the spun yarn drawing apparatus 3 and then to wind the yarns Y by a yarn winding apparatus 4.

The spinning apparatus 2 is configured to generate the yarns Y by continuously spinning out molten polymer such as nylon and polyester. To the yarns Y spun out from the spinning apparatus 2, oil is applied at an oil guide 10. The yarns Y are then sent to the spun yarn drawing apparatus 3 via a guide roller 11.

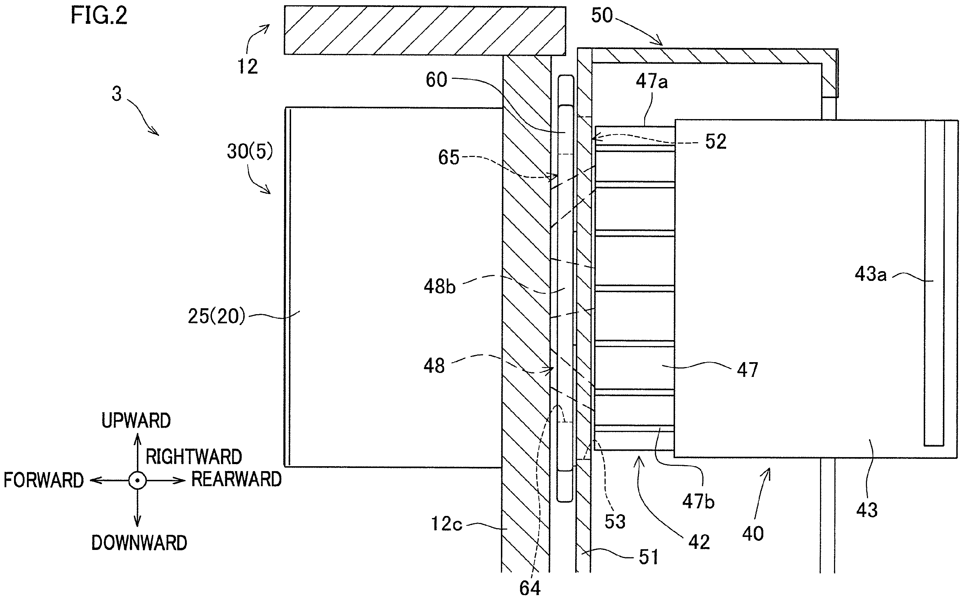

The spun yarn drawing apparatus 3 is an apparatus for drawing the yarns Y and is provided below the spinning apparatus 2. The spun yarn drawing apparatus 3 includes plural (5 in the present embodiment) godet rollers 20 (godet rollers 21 to 25) housed in a thermal insulation box 12. Each godet roller 20 is rotationally driven by a later-described motor 40 (see FIG. 2). Each godet roller 20 is an induction heating roller induction-heated by a coil, and yarns Y are wound thereon. An inlet 12a through which the yarns Y are introduced into the thermal insulation box 12 is formed at a lower part of the right side wall of the thermal insulation box 12, whereas an outlet 12b through which the yarns Y are taken out from the thermal insulation box 12 is formed at an upper part of the right side wall of the thermal insulation box 12. The yarns Y are wound onto the lower godet roller 21 first and then on the remaining rollers 22 to 25 in order, each at a winding angle of less than 360 degrees.

The lower three godet rollers 21 to 23 (low-speed rollers of the present invention) are preheating rollers for preliminarily heating the yarns Y before drawing them. The roller surface temperature of each of these rollers is arranged to be equal to or higher than the glass transition temperature of the yarns Y (e.g., set at about 90 to 100 degrees centigrade). Meanwhile, the upper two godet rollers 24 and 25 (high-speed rollers of the present invention) are conditioning rollers for thermally setting the drawn yarns Y. The roller surface temperature of each of these rollers is arranged to be higher than the roller surface temperatures of the lower three godet rollers 21 to 23 (e.g., set at about 150 to 200 degrees centigrade) . The yarn feeding speeds of the upper two godet rollers 24 and 25 are higher than the yarn feeding speeds of the lower three godet rollers 21 to 23.

The yarns Y introduced into the thermal insulation box 12 through the inlet 12a are, to begin with, preliminarily heated to a drawable temperature while being transferred by the godet rollers 21 to 23. The preliminarily-heated yarns Y are drawn on account of a difference in yarn feeding speed between the godet roller 23 and the godet roller 24. The yarns Y are then further heated while being transferred by the godet rollers 24 and 25, with the result that the drawn state is thermally set. The yarns Y having been drawn in this way go out from the thermal insulation box 12 through the outlet 12b.

The yarns Y drawn by the spun yarn drawing apparatus 3 are sent to the yarn winding apparatus 4 via a guide roller 13. The yarn winding apparatus 4 is an apparatus for winding the yarns Y and is provided below the spun yarn drawing apparatus 3. The yarn winding apparatus 4 includes members such as a bobbin holder 14 and a contact roller 15. The bobbin holder 14 is cylindrical in shape and is long in the front-back direction. The bobbin holder 14 is rotationally driven by an unillustrated motor. To the bobbin holder 14, bobbins B are attached along the axial direction to be side by side. By rotating the bobbin holder 14, the yarn winding apparatus 4 simultaneously winds the yarns Y onto the bobbins B, so as to produce packages P. The contact roller 15 makes contact with the surfaces of the packages P to adjust the shape of each package P by applying a predetermined contact pressure to each package P.

In a different perspective, in the spun yarn drawing apparatus 3, the yarns Y are heated and sent to the downstream side in the yarn running direction, by the godet rollers 20, the motor 40 (see FIG. 2), etc. For this reason, hereinafter, one godet roller 20 and its surroundings will be termed a yarn heater 5. To put it differently, the spun yarn drawing apparatus 3 of the present embodiment includes five yarn heaters 5 (yarn heaters 26 to 30).

### (Structure of Yarn Heater)

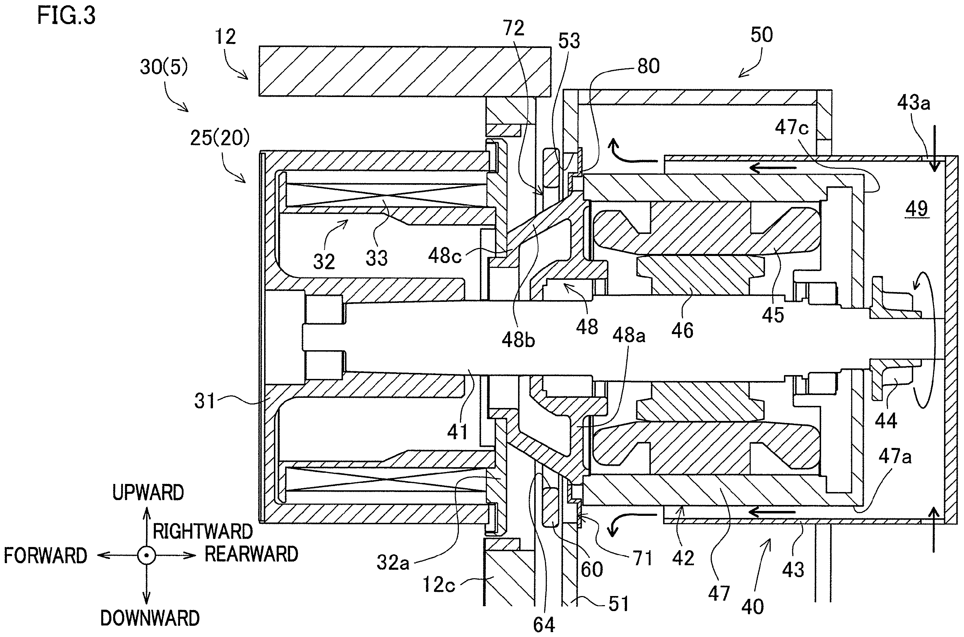

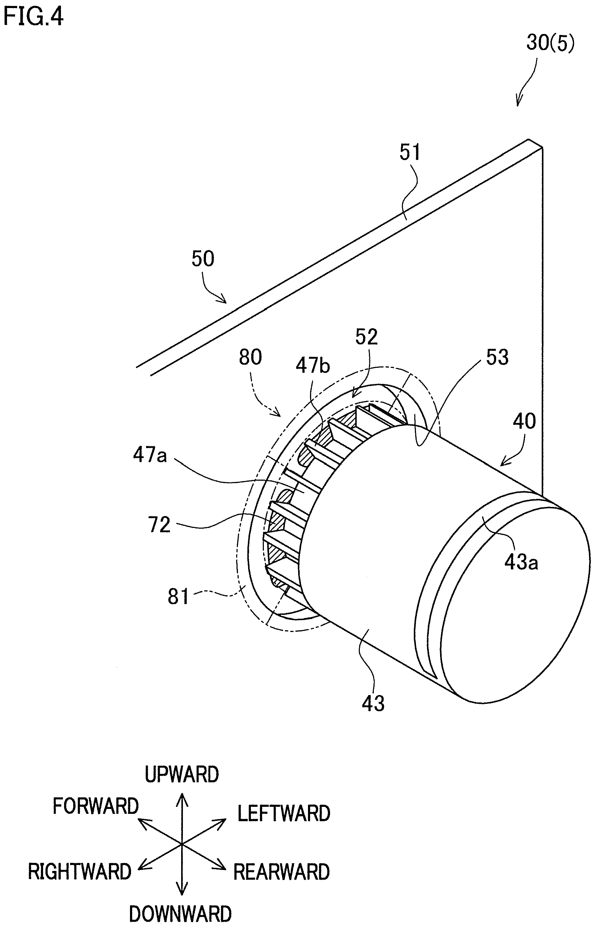

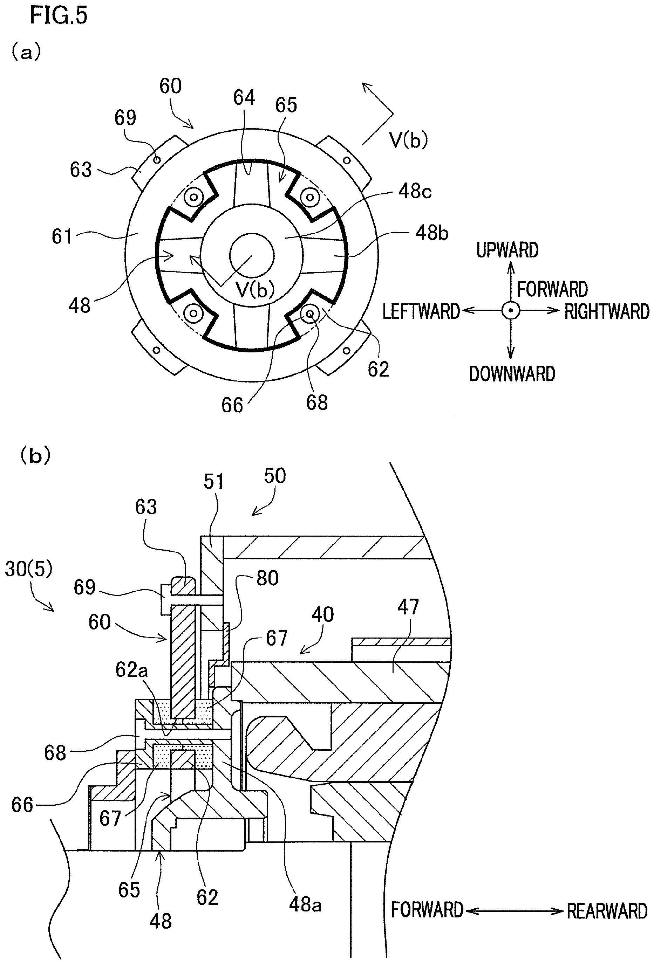

The structure of the yarn heater 5 will be described with reference to FIG. 2 to FIG. 5. FIG. 2 is a cross section taken along a line II-II in FIG. 1. FIG. 3 is a cross section taken along a line III-III in FIG. 1. FIG. 4 is a perspective view of a later-described motor mounting portion 50 and the motor 40. FIG. 5(a) is a front elevation of a later-described attaching flange 60 and the motor 40. FIG. 5(b) is a cross section taken along a line V(b)-V(b) in FIG. 5(a). While FIG. 2 and the subsequent figures show only the godet roller 25 among the five godet rollers 20, the remaining godet rollers 21 to 24 are structurally identical with the godet roller 25.

The yarn heater 5 is provided to send the yarns Y to the downstream side in the yarn running direction, while heating the yarns Y. As shown in FIG. 2, the yarn heater 5 includes the godet roller 20 (heating roller of the present invention), the motor 40, and the attaching flange 60 attached to the motor mounting portion 50. In summary, the thermal insulation box 12 and the motor mounting portion 50 are lined up in the front-back direction, the godet roller 20 is housed in the thermal insulation box 12, and the motor 40 is attached to the motor mounting portion 50 via the attaching flange 60. The motor mounting portion 50 is attached to an unillustrated base. The thermal insulation box 12 and the motor mounting portion 50 are connected to each other by an unillustrated connecting member. The godet roller 20 and the motor 40 are lined up in the front-back direction (i.e., the direction of the drive shaft in the present invention). When members are "lined up", members are simply arranged on a line. Another component may be provided between the godet roller 20 and the motor 40. Each component will be detailed below.

As shown in FIG. 3, the godet roller 20 includes a cylindrical roller main body 31 and a heater 32 provided inside the roller main body 31. The roller main body 31 is attached to the drive shaft 41 of the motor 40, and is rotationally driven about the shaft center of the drive shaft 41. Yarns are wound onto the surface of the roller main body 31. The heater 32 is configured to heat the roller main body 31. The heater 32 includes, for example, a coil 33, and heats the surface of the roller main body 31 by means of induction heating by the coil 33. The amount of a current flowing in the coil 33 is controlled by an unillustrated controller to maintain the roller main body 31 at a predetermined set temperature, based on a temperature detected by an unillustrated temperature sensor in the roller main body 31. A rear end portion 32a of the heater 32 is attached to a later-described heater mounting portion 48 of the motor 40. The rear surface of the rear end portion 32a is exposed to the air.

The motor 40 is, for example, a typical self-cooling AC motor. The godet roller 20 is attached to the drive shaft 41 of the motor 40. As shown in FIG. 3, the motor 40 includes a motor housing 42, a cover 43, and a fan 44. As the fan 44 provided in a space 49 formed between the motor housing 42 and the cover 43 rotates, cooling wind for cooling the motor housing 42 is generated.

The motor housing 42 houses a stator 45 and a rotor 46 of the motor 40, an unillustrated bearing, etc. The motor housing 42 includes a casing 47 which is open to the front side and is a cylinder and a heater mounting portion 48 which is attached to a front end portion of the casing 47. The motor housing 42 is sealed by the casing 47 and the heater mounting portion 48. Air cleanliness in a place where the yarn heater 5 is provided is typically not good because the oil applied to the yarns Y by the oil guide 10 tends to be atomized and float in the air. The motor housing 42 is arranged as above, in order to prevent outside air from entering the motor housing 42.

The casing 47 is provided behind an attaching plate 51 (described later) of the motor mounting portion 50. On the circumferential surface 47a of the casing 47, fins 47b (see FIG. 2 and FIG. 4) are provided to extend in the radial direction of the motor 40. The fins 47b are provided to guide cooling wind generated by the fan 44. While the fins 47b are parallel to the front-back direction in the present embodiment, the disclosure is not limited to this arrangement.

The heater mounting portion 48 includes a lid portion 48a attached to the casing 47 and formed over the entire circumference of the motor 40, a leg portion 48b extending forward from the lid portion 48a, and a front end portion 48c connected to the leg portion 48b. The front end portion 48c is connected to the rear end portion 32a of the heater 32 by an unillustrated screw. In this way, the heater 32 is attached to the heater mounting portion 48.

The cover 43 is provided to guide cooling wind generated by the fan 44 forward. The cover 43 is a cylinder covering the circumferential surface 47a and the rear end surface 47c of the casing 47 of the motor housing 42. At a rear side part of the circumferential surface of the cover 43, a mesh 43a is provided to introduce air into a space 49 formed between the cover 43 and the casing 47 (see FIG. 2 and FIG. 4). The fan 44 is provided to generate cooling wind by being rotationally driven by the drive shaft 41. The fan 44 is attached to the drive shaft 41 and is rotationally driven about the axial center of the drive shaft 41. The fan 44 is provided behind the motor housing 42 (i.e., provided outside the motor housing 42 and on the side opposite to the leading end of the drive shaft 41). To put it differently, in the front-back direction, the fan 44 opposes the godet roller 20 across the motor mounting portion 50.

As the fan rotates (as indicated by a partial elliptical arrow in FIG. 3), air outside the cover 43 is taken into the space 49 inside the cover 43 through the mesh 43a, and the air flows forward along the fins 47b (see FIG. 2 and FIG. 4) through a gap formed between the cover 43 and the circumferential surface 47a of the casing 47. The airflow (indicated by linear arrows in FIG. 3) generated in this way cools the surface of the casing 47 as cooling wind. With this, the inside of the motor 40 is cooled on account of heat conduction. While in FIG. 2 to FIG. 4 the cover 43 covers only a part of the circumferential surface 47a in the front-back direction, the cover 43 may entirely cover the circumferential surface 47a.

The motor mounting portion 50 is provided to fix the motor 40 via the attaching flange 60. The motor mounting portion 50 includes the attaching plate 51. The attaching plate 51 is provided behind a back plate 12c of the thermal insulation box 12, and extends in the up-down direction and in the left-right direction. In the attaching plate 51, an insertion hole 52 (see FIG. 2 and FIG. 4) which is sized so that the motor 40 can be inserted therein in the front-back direction (i.e., the direction of the drive shaft in the present invention). The diameter of the inner circumferential surface 53 of the insertion hole 52 (see FIG. 2 and FIG. 4) is slightly longer than the outer diameter of the cover 43 of the motor 40. This allows the motor 40 to be inserted into the insertion hole 52 from the front side. The attaching plate 51 and the back plate 12c of the thermal insulation box 12 are lined up in the front-back direction and are connected to each other by an unillustrated connecting member.

The motor 40 is attached to the attaching flange 60, and the attaching flange 60 is attached to the attaching plate 51 from the front side. In other words, the motor 40 is attached to the attaching plate 51 via the attaching flange 60. The attaching flange 60 is provided between the attaching plate 51 and the back plate 12c of the thermal insulation box 12 in the front-back direction (see FIG. 2 and FIG. 3).

As shown in FIG. 5(a), the attaching flange 60 is roughly a ring-shaped member. The attaching flange 60 includes a main body portion 61 (a ring-shaped portion surrounded by full lines and two-dot chain lines), internal portions 62 (portions surrounded by a thick line and the two-dot chain lines) formed radially inside the main body portion 61, and external portions 63 protruding radially outward from the main body portion 61. An inner circumferential surface 64 (indicated by the thick line) and a through hole 65 penetrating the attaching flange 60 in the front-back direction are formed in the attaching flange 60 (see FIG. 2 and FIG. 5(a)).

As shown in FIG. 5(b), a hole 62a is formed in each internal portion 62 to penetrate the same in the front-back direction. A connecting nut 66 with a head portion is inserted into the hole 62a from the front side. Furthermore, in the front-back direction, anti-vibration rubber members 67 (anti-vibration members of the present invention) are interposed between the lid portion 48a of the heater mounting portion 48 and the attaching flange 60 and between the head portion of the connecting nut 66 and the attaching flange 60, respectively. The connecting nut 66, the internal portion 62, and the lid portion 48a are connected by the screw 68 while the two anti-vibration rubber members 67 are interposed in the front-back direction. To put it differently, the motor 40 is connected to the attaching flange 60 via the connecting nut 66 and the screw 68 (which are equivalent to a connecting tool of the present invention) penetrating the attaching flange 60 in the front-back direction, with the anti-vibration rubber members 67 being interposed. Furthermore, the external portion 63 of the attaching flange 60 is connected to the attaching plate 51 via a screw 69. As such, the anti-vibration rubber member 67 is interposed between the motor 40 and the attaching flange 60. On this account, vibration of the motor 40 is attenuated by the anti-vibration rubber member 67, and propagation of vibration of the motor 40 to the attaching plate 51 via the attaching flange 60 is restrained.

The heater mounting portion 48 of the motor 40 is inserted into the through hole 65 in the attaching flange 60 in the front-back direction. To be more specific, the leg portion 48b of the heater mounting portion 48 is inserted into the through hole 65 (see FIG. 2).

Referring back to FIG. 2 and FIG. 3, the positional relationship between the motor 40, the attaching plate 51, etc. in the front-back direction will be described. The casing 47 of the motor housing 42 is positioned behind the attaching plate 51. The heater mounting portion 48 of the motor housing 42 passes through the insertion hole 52 of the attaching plate 51 and the through hole 65 of the attaching flange 60 in the front-back direction (see FIG. 2). In this arrangement, gaps are formed between the motor 40 and the inner circumferential surface 53 of the insertion hole 52 and between the motor 40 and the inner circumferential surface 64 of the through hole 65, respectively. These gaps will be described below.

To begin with, the gap formed between the motor 40 and the inner circumferential surface 53 of the insertion hole 52 will be described. As shown in FIG. 2 and FIG. 3, in the motor 40, the diameter of the cover 43 is the longest. The insertion hole 52 of the attaching plate 51 is formed so that the motor 40 is insertable therein from the front side. In other words, as the motor 40 attached to the attaching flange 60 is inserted into the insertion hole 52 from the front side, the attaching flange 60 and the motor 40 are attached to the attaching plate 51. On this account, as shown in FIG. 3, a gap 71 (a first gap of the present invention) is formed between a part (more specifically, the heater mounting portion 48) of the motor 40, where the diameter is shorter than that of the cover 43, and the inner circumferential surface 53 of the insertion hole 52.

Now, the gap formed between the motor 40 and the inner circumferential surface 64 of the through hole 65 will be described. As described above, the anti-vibration rubber member 67 is interposed between the motor 40 and the attaching flange 60 in order to restrain the vibration of the motor 40 from being propagated to the attaching plate 51 via the attaching flange 60. In regard to this arrangement, if the inner circumferential surface 64 of the through hole 65 of the attaching flange 60 makes contact with the heater mounting portion 48, the vibration of the motor 40 may be propagated to the attaching plate 51 via the heater mounting portion 48 and the attaching flange 60, and the anti-vibration effect of the anti-vibration rubber member 67 may not be attained. On this account, as shown in FIG. 3, a gap 72 (a second gap of the present invention) must be formed between the inner circumferential surface 64 and the heater mounting portion 48 (leg portion 48b) in order to prevent the heater mounting portion 48 and the attaching flange 60 from making contact with each other. In this way, in the yarn heater 5, the gap 71 and the gap 72 are formed at different locations in the front-back direction.

In the yarn heater 5 arranged as described above, the inventors of the subject application found that the following problem occurred when the godet roller 20 was rotationally driven by the motor 40 while the godet roller 20 was heated by the heater 32. The efficiency of motors have recently been improved (i.e., heat loss of motors have been restrained), and the power consumption of motors has been continuously lowered. However, even when such a highly efficient motor was used as the motor 40 of the yarn heater 5, the power consumption of the entire yarn heater 5 was not sufficiently lowered. The inventors of the subject application considered that the reason was as below.

In the motor 40, cooling wind (see the linear arrows in FIG. 3) generated by the rotation of the fan 44 together with the drive shaft 41 heads forward (toward the godet roller 20 in the front-back direction) through the gap between the circumferential surface 47a of the casing 47 of the motor housing 42 and the cover 43. Most of the cooling wind is blocked by the motor mounting portion 50. However, as described above, the gap 71 is formed between the motor 40 and the inner circumferential surface 53 and the gap 72 is formed between the motor and the inner circumferential surface 64 (see FIG. 3). On this account, when cooling wind flows into the godet roller 20 via the gaps 71 and 72 and hits the rear end portion 32a of the heater 32, the heater 32 is cooled and the surface temperature of the roller main body 31 is lowered. As a result, the current flowing in the coil 33 is increased by the controller (not illustrated) to maintain the temperature of the roller main body 31 to be at the predetermined temperature, and hence the power consumption of the heater 32 is disadvantageously increased. In addition to the above, in a highly-efficient motor with small heat loss, the temperature of the motor 40 is not easily increased, and the cooling wind does not greatly cool the motor housing 42. (To put it differently, the cooling wind is not easily heated by the motor housing 42.) With this arrangement, the heater 32 is cooled by the cooling wind with a low temperature. Because the godet roller 20 is cooled more and the power consumption of the heater 32 is increased as compared to the conventional cases, decrease in power consumption of the motor thanks to increase in efficiency is disadvantageously canceled out.

Furthermore, even if, for example, the fan 44, etc. are arranged to reverse the direction of the flow of the cooling wind, the godet roller 20 may be disadvantageously cooled as part of air sucked by the motor 40 to generate the cooling wind flows in the vicinity of the godet roller 20. Furthermore, because part of the air sucked by the motor 40 is heated by the godet roller 20, the temperature of the generated cooling wind may be increased, and the efficiency of cooling the motor 40 may be deteriorated.

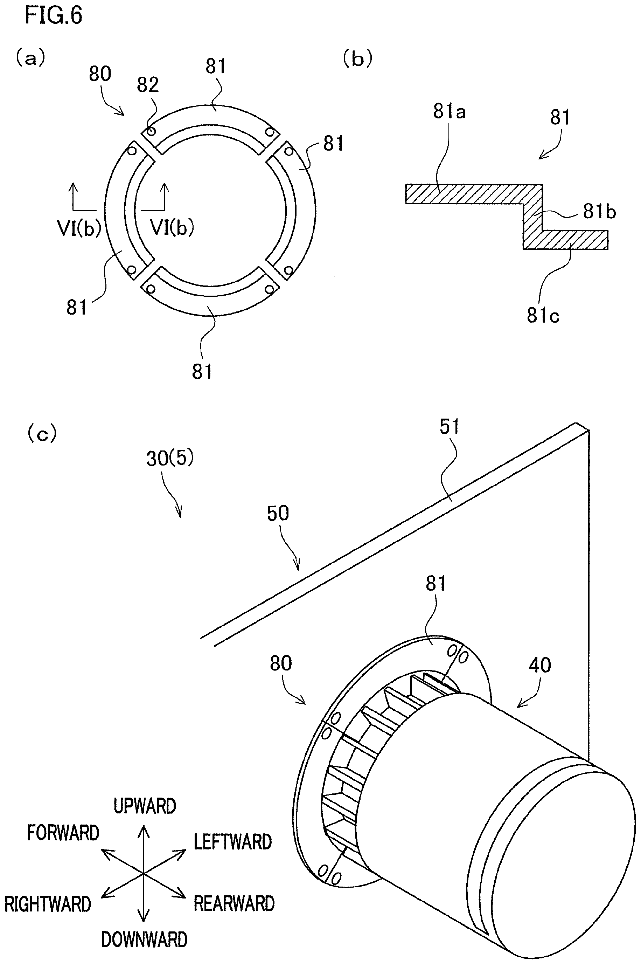

Under this circumstance, the inventors of the subject application focused on the relationship between the existence of the above-described gaps and the power consumption of the heater 32. In the present embodiment, the yarn heater 5 is arranged as described below, in order to restrain the heater 32 from being cooled by the cooling wind and to restrain increase in power consumption of the heater 32. The details will be given mainly with reference to FIG. 3 and FIGs. 6(a) to 6(c). FIG. 6(a) is a front elevation of a shielding plate 80 (a wind shield member of the present invention). FIG. 6(b) is a cross section taken along a line VI(a)-VI(a) in FIG. 6(a). FIG. 6(c) shows a state in which the shielding plate 80 is attached to the attaching plate 51.

### (Structure of Shielding Plate)

As shown in FIG. 3 and FIG. 6, the shielding plate 80 is provided on the rear surface of the attaching plate 51 of the motor mounting portion 50. The shielding plate 80 blocks the cooling wind flowing forward (toward the godet roller 20 side) by closing the gap 71 between the motor 40 and the inner circumferential surface 53. As shown in FIG. 6(a) and FIG. 6(c), the shielding plate 80 is ring-shaped on the whole. The material of the shielding plate is not limited to any particular material, as long as the cooling wind is blocked. Examples of the material include metal and synthetic resin. In the present embodiment, the shielding plate 80 is provided for each of the yarn heaters 5 (yarn heaters 29 and 30) having the godet rollers 24 and 25 which rotate at relatively high speeds. The shielding plates 80 may be provided for all yarn heaters 5.

In the circumferential direction, the shielding plate 80 can be divided into plural (4 in the present embodiment) plate pieces 81. A hole 82 into which a screw (not illustrated) or the like is inserted is formed in each plate piece 81. The cross sectional shape of each plate piece 81 is shown in FIG. 6(b). The plate piece 81 includes a first flat portion 81a on the radially outer side, a bended portion 81b which is an intermediate portion in the radial direction, and a second flat portion 81c on the radially inner side. In this way, the plate piece 81 is shaped to enter the gap 71 in accordance with the shape of the motor 40 and close the gap 71 (see FIG. 3). To be more specific, the first flat portions 81a of the plate pieces 81 are attached to the attaching plate 51, and the second flat portions 81c are in contact with the entire circumference of the lid portion 48a of the heater mounting portion 48. As such, the gap 71 is closed. In this manner, the gap 71 is closed by the shielding plate 80 over the entire circumference of the insertion hole 52 (see FIG. 6(c)).

In the present embodiment, each plate piece 81 is fixed to the attaching plate 51 by a screw. Alternatively, each plate piece 81 may be pasted by an adhesive tape or the like. Alternatively, the attaching plate 51 may be a magnetic body made of iron or the like, the plate piece 81 may be a magnet, and the plate piece 81 may be attached to the attaching plate 51 by magnetic force.

### (Flow of Cooling Wind)

Referring back to FIG. 3, the following will describe the flow of the cooling wind in the yarn heater 5 structured as described above. As the drive shaft 41 of the motor 40 rotates so that the fan 44 rotates, cooling wind is generated as described above, and flows forward through the gap between the motor housing 42 and the cover 43 so as to cool the motor housing 42. In this regard, because the gap 71 is closed by the shielding plate 80, the cooling wind does not pass the gap 71 and is diverted outward in the radial direction of the motor 40 (see the arrows in the vicinity of the shielding plate 80 in FIG. 3). On this account, the cooling wind after cooling the motor 40 does not reach the heater 32.

As described above, in the present embodiment, the shielding plate 80 is provided for each of the yarn heaters 5 (yarn heaters 29 and 30) having the godet rollers 24 and 25 which at least rotate at relatively high speeds (i.e., the rotational speed of the fan is high and strong cooling wind is generated). It is therefore possible to prevent the strong cooling wind from hitting the godet rollers 24 and 25. Furthermore, because the surface temperatures of the godet rollers 24 and 25 are higher than the surface temperatures of the godet rollers 21 to 23, the surface temperatures of the godet rollers 24 and 25 are easily decreased by the cooling wind, and additional power consumption tends to be required to compensate the temperature decrease. In the present embodiment, such increase in power consumption is effectively restrained by the shielding plate 80.

In regard to the above, even when the motor 40 is structured so that the cooling wind flows in the reverse direction (i.e., front to rear), only the air behind the shielding plate 80 is used for generating cooling wind, because the gap 71 is closed by the shielding plate 80. In other words, the air in front of the shielding plate 80 (i.e., on the godet roller 20 side) does not contribute to the generation of the cooling wind. It is therefore possible to restrain an airflow generated in accordance with the generation of cooling wind from flowing toward the godet roller 20 side.

It is difficult to close the gap 72 because it exists in a narrow space between the thermal insulation box 12 and the motor mounting portion 50 in the front-back direction. However, the gap 71 and the gap 72 are formed at different locations in the front-back direction (i.e., cooling wind does not reach the heater 32 unless passing through both the gap 71 and the gap 72 in the front-back direction). On this account, the cooling wind is effectively blocked when the gap 71 is closed.

### (Difference in Heater Power Consumption between Presence/Absence of Shielding Plate)

The following will describe a difference in power consumption of the heater 32 between the presence and the absence of the shielding plate 80. The inventors of the subject application measured the power consumption of the heater 32 when the shielding plate 80 was provided for the yarn heater 5 and the power consumption of the heater 32 when the shielding plate 80 was not provided, and compared these results. In both cases, the motor speed was about 4700m/min, the motor rotation number was about 5000rpm, the heater set temperature was 137 degrees centigrade, and the ambient temperature was about 25 degrees centigrade. The inventors compared the case where the shielding plate 80 was provided for the yarn heater 5 with the case where the shielding plate 80 was not provided, in terms of the power consumption of the heater 32 after the output of the heater 32 became stable. As a result, the power consumption of the heater 32 when the shielding plate 80 was provided was small, i.e., 971W. Meanwhile, the power consumption of the heater 32 when the shielding plate 80 was not provided was large, i.e., 1211W. The comparison proves that, when the shielding plate 80 is provided, cooling wind is blocked, temperature decrease of the heater 32 due to the cooling wind is restrained, and the power consumption of the heater 32 is significantly decreased.

In this manner, it is possible to restrain, by the shielding plate 80, an airflow generated in accordance with the generation of cooling wind from hitting the godet roller 20. Because the cooling of the godet roller 20 by the airflow is restrained, it is possible to restrain the heater 32 from being additionally driven to maintain the godet roller 20 at the predetermined temperature. Increase in power consumption of the heater 32 due to cooling wind for cooling the motor 40 can therefore be restrained.

In addition to the above, because the shielding plate 80 obstructs the flow of the cooling wind after cooling the motor 40, it is possible to effectively restrain the temperature of the godet roller 20 from being lowered.

Furthermore, because the gap 71 is closed by the shielding plate 80, blocking of the cooling wind is ensured and cooling of the godet roller 20 is certainly restrained.

In addition to the above, the motor 40 is attached to the attaching plate 51 via the attaching flange 60. For this reason, as a suitable attaching flange 60 is selected in accordance with size and/or shape of the motor 40, the motor can be attached to the attaching plate 51 without replacing the attaching plate 51, when the motor 40 is attached or replaced.

Furthermore, because vibration of the motor 40 is attenuated by the anti-vibration rubber members 67, propagation of vibration of the motor 40 to the attaching plate 51 via the attaching flange 60 is restrained. Generation of noise, etc. is therefore restrained.

Furthermore, because the connecting nut 66 and the screw 68 penetrate the attaching flange 60 in the front-back direction to connect the motor 40 to the attaching flange 60, the attaching flange 60 is easily processed as compared to cases where, for example, the connecting nut 66 and the screw 68 are attached in the radial direction of the attaching flange 60. Furthermore, because the anti-vibration rubber member 67 is interposed between the motor 40 and the attaching flange 60 in the front-back direction, the manufacturing is easy as compared to cases where, for example, the anti-vibration rubber member 67 is interposed in the radial direction.

Furthermore, because the gap 71 is closed by the shielding plate, cooling wind is effectively blocked without requiring any dedicated measure for closing the gap 72. It is therefore possible to effectively restrain the cooling wind from reaching the godet roller 20.

In addition to the above, because the shielding plate 80 is provided over the entire circumference of the insertion hole 52, the gap 71 between the motor 40 and the inner circumferential surface 53 of the insertion hole 52 is certainly closed. Blocking of the cooling wind is therefore further ensured.

In addition to the above, the shielding plate 80 is divided into the plural plate pieces 81. On this account, even when the motor 40 and/or the godet roller 20 have already been installed and a shielding plate 80 is newly provided, the gap 71 is easily closed by the plate pieces 81 without temporarily detaching the motor 40 or the like.

In addition to the above, by only attaching the fan 44 to the drive shaft 41 of the motor 40, cooling wind is generated as the fan 44 is rotationally driven by the motor 40. Cost reduction or the like is therefore achieved as compared to cases where the fan 44 is provided as a device separated from the motor 40.

In addition to the above, because the fan 44 is provided outside the motor housing 42 and cooling wind flows along the motor housing 42 so as to cool the motor housing 42, the motor 40 can be cooled even when the inside of the motor 40 is sealed. It is therefore possible to cool the motor while restraining the deterioration of lifetime of the motor 40.

In addition to the above, in the spun yarn drawing apparatus 3, the shielding plates 80 are provided at least for the motors 40 which rotationally drive the high-speed godet roller 24 and 25. It is therefore possible to prevent strong cooling wind from hitting the godet rollers 24 and 25, and to restrain cooling of the godet rollers 24 and 25. Increase in power consumption of the heater can therefore be effectively restrained.

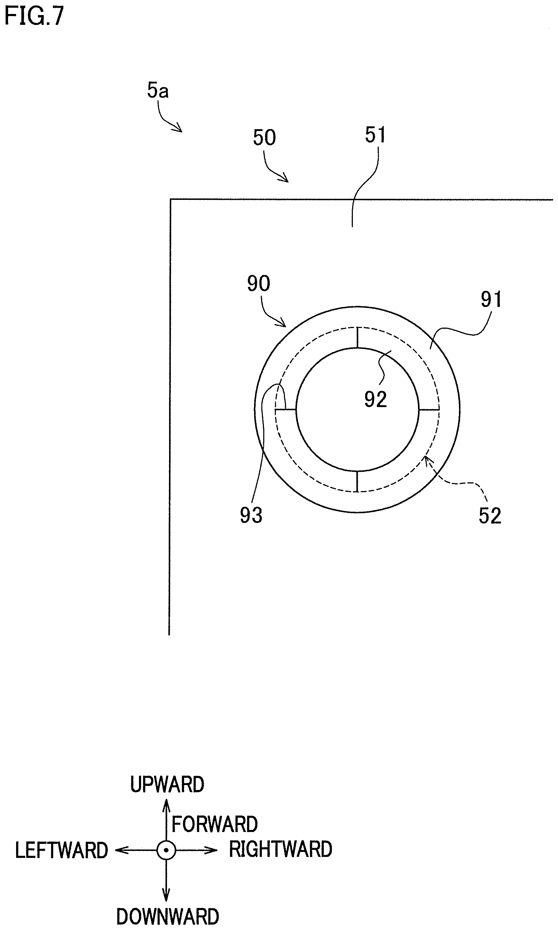

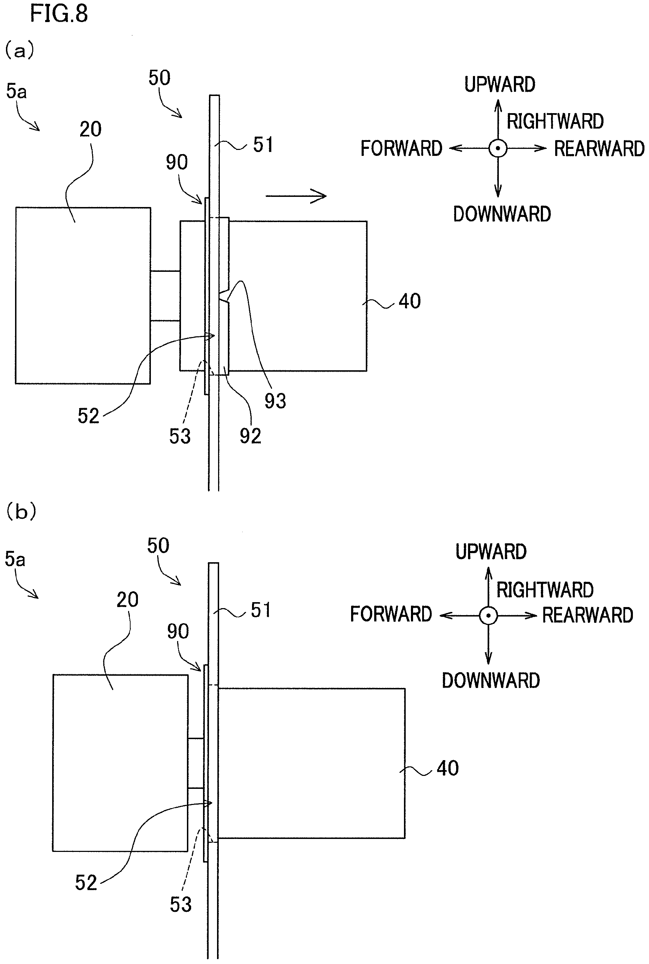

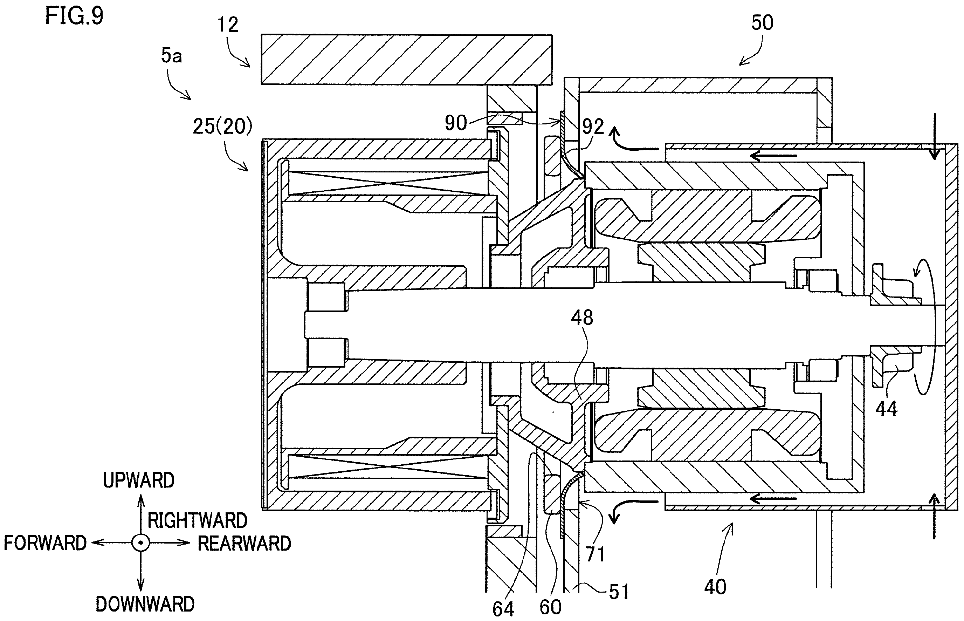

The following will describe modifications of the above-described embodiment. The members identical with those in the embodiment above will be denoted by the same reference numerals and the explanations thereof are not repeated.
(1) While in the embodiment above each plate piece 81 of the shielding plate 80 has the bended portion 81b, the disclosure is not limited to this arrangement. The plate piece 81 may be a flat plate. The shape or the like of the shielding plate 80 may be suitably determined in accordance with, for example, the shape of the motor 40 and the positional relationship between the motor 40 and the attaching plate 51.
(2) While in the embodiment above the yarn heater 5 includes the shielding plate 80 as a shielding member, the disclosure is not limited to this arrangement. For example, as shown in FIG. 7 to FIG. 9, a yarn heater 5a may include a shielding rubber member 90. The following will describe the details. FIG. 7 is a front elevation of the yarn heater 5a. The thermal insulation box 12 and the godet roller 20 are omitted from the figure. FIG. 8(a) is a profile showing a state in which the motor 40 is being inserted into the insertion hole 52 when the motor 40 is attached to the attaching plate 51. FIG. 8(b) is a profile showing a state in which the insertion of the motor 40 has been completed. FIG. 9 is a cross section showing the state in which the insertion of the motor 40 has been completed.
   The shielding rubber member 90 is an elastic member formed of a ring-shaped rubber plate. As shown in FIG. 7, the shielding rubber member 90 is, for example, attached to the front surface of the attaching plate 51 and is provided over the entire circumference of the insertion hole 52. The shielding rubber member 90 includes an external portion 91 provided externally outside the insertion hole 52 and an internal portion 92 extending inward in the radial direction of the insertion hole 52. In the internal portion 92, slits 93 extending radially outward from a radially inside end portion of the insertion hole 52 are formed in the circumferential direction of the insertion hole 52. The inner diameter of the shielding rubber member 90 is shorter than the outer diameter of the cover 43 of the motor 40.
   When the motor 40 is mounted to the motor mounting portion 50, as shown in FIG. 8(a), the motor 40 is inserted into the insertion hole 52 from the front side. At this stage, the internal portion 92 of the shielding rubber member 90 is warped rearward. This allows the motor 40 to be inserted into the insertion hole 52. Because of the slits 93, the internal portion 92 is easily warped in the front-back direction, and hence the insertion of the motor 40 can be easily done. After the completion of the insertion of the motor 40 into the insertion hole 52, the internal portion 92 elastically generates force to restore the original shape as shown in FIG. 8(b) and FIG. 9. At this stage, for example, the internal portion 92 makes contact with the side face of the motor 40 or the heater mounting portion 48 (see FIG. 9). On this account, the gap 71 is closed. With this arrangement, airflow is easily and certainly blocked only by inserting the motor 40 into the insertion hole 52. As long as the above-described elasticity is exhibited, a wind shield member made of a material other than rubber may be used in place of the shielding rubber member 90.
(3) While in the embodiment above the motor housing 42 is sealed, the disclosure is not limited to this arrangement. As long as a certain degree of air cleanliness is obtained, for example, an open-circuit ventilation motor in which a fan is provided in a motor housing may be employed.
(4) While in the embodiment above the fan 44 is attached to the drive shaft 41, the disclosure is not limited to this arrangement. For example, the fan may be rotationally driven by a gear, a belt, etc. which are not illustrated. Alternatively, an unillustrated cooler with a fan may be provided in addition to the motor 40.
(5) While in the embodiment above the shielding plate 80 or the shielding rubber member 90 is provided over the entire circumference of the insertion hole 52, the disclosure is not limited to this arrangement. When, for example, the gap 71 between the motor 40 and the insertion hole 52 does not extend over the entire circumference, the shielding plate 80 or the like may be provided only at a part where a gap is formed.
(6) While in the embodiment above the shielding plate 80 or the shielding rubber member 90 closes the gap 71, the disclosure is not limited to this arrangement. A wind shield member may be provided to obstruct cooling wind or an airflow generated in accordance with the generation of cooling wind; for example, a wind shield member is provided at an intermediate portion of the motor 40 in the front-back direction. This prevents the airflow from flowing toward the godet roller 20 side.
(7) The motor 40 may not be attached to the attaching plate 51. For example, cooling wind is effectively blocked by the shielding plate 80 when the motor 40 is attached to an attaching member which forms a large gap with the motor 40.
(8) While in the embodiment above the yarn heater 5 is employed in the spun yarn drawing apparatus 3, the disclosure is not limited to this arrangement. The yarn heater 5 may be employed in, for example, a yarn supplying device which simply sending yarns Y to the downstream side in the yarn running direction while heating the yarns Y.

## Claims

1. A yarn heater (5) comprising:
a heating roller (20) which includes a roller main body (31) and a heater (32) provided in the roller main body (31) to heat the roller main body (31), and which is configured to heat yarns (Y);
a motor (40) which is configured to rotationally drive the heating roller (20);
a fan (44) which rotates so as to generate cooling wind for cooling the motor (40); and
a wind shield member (80, 90) which prevents an airflow generated in accordance with generation of the cooling wind from flowing toward the heating roller (20); wherein,
the heating roller (20) is lined up with the motor (40) in a direction of a drive shaft (41) of the motor (40) and is attached to the motor (40),
the fan (44) generates the cooling wind which flows from the motor (40) side toward the heating roller (20) side in the direction of the drive shaft (41),
the wind shield member (80, 90) is provided between the fan (44) and the heating roller (20) in the direction of the drive shaft (41) to block the flow of the cooling wind after the cooling wind cools the motor (40),
the motor (40) is attached to a motor mounting portion (50) in which an insertion hole (52) in which the motor (40) is inserted is formed,
the fan (44) and the heating roller (20) oppose each other across the motor mounting portion (50), and
a first gap (71) is formed between the motor (40) and the inner circumferential surface (53) of the insertion hole (52), the yarn heater being **characterized in that**
the wind shield member (80, 90) is provided to close the first gap (71).

2. The yarn heater (5) according to claim 1, wherein,
the motor mounting portion (50) includes an attaching plate (51) in which the insertion hole (52) is formed,
an attaching flange (60) is provided between the attaching plate (51) and the heating roller (20) in the direction of the drive shaft (41) and is attached to the attaching plate (51), and
the motor (40) is attached to the attaching plate (51) via the attaching flange (60).

3. The yarn heater (5) according to claim 2, wherein, the motor (40) is attached to the attaching flange (60) with an anti-vibration member (67) being interposed between the motor (40) and the attaching flange (60).

4. The yarn heater (5) according to claim 3, wherein,
the motor (40) is connected to the attaching flange (60) via a connecting tool (66) which penetrates the attaching flange (60) in the direction of the drive shaft (41), and
the anti-vibration member (67) is interposed between the motor (40) and the attaching flange (60) in the direction of the drive shaft (41).

5. The yarn heater (5) according to claim 4, wherein,
a through hole (65) is formed in the attaching flange (60) to penetrate the attaching flange (60) in the direction of the drive shaft (41),
the motor (40) includes
a heater mounting portion (48) which is inserted into the through hole (65), the heater (32) of the heating roller (20) being attached to the heater mounting portion (48), and
a second gap (72) is formed between the inner circumferential surface (64) of the through hole (65) and the heater mounting portion (48).

6. The yarn heater (5) according to any one of claims 1 to 5, wherein, the wind shield member (80, 90) is provided over the entire circumference of the insertion hole (52).

7. The yarn heater (5) according to claim 6, wherein, the wind shield member (80) is dividable into plural pieces in the circumferential direction of the insertion hole (52).

8. The yarn heater (5) according to any one of claims 1 to 5, wherein,
the wind shield member (90) is attached to the motor mounting portion (50), and is shaped to extend inward in a radial direction of the insertion hole (52) from the entire circumference of the insertion hole (52),
the inner diameter of the wind shield member (90) is shorter than the outer diameter of the motor (40), and
the wind shield member (90) is an elastic member in which a portion inside the insertion hole (52) is warped in the axial direction of the insertion hole (52) when the motor is inserted into the insertion hole (52), the elastic member closing the first gap (71) when the motor (40) is attached to the motor mounting portion (50).

9. The yarn heater (5) according to claim 8, wherein, in the wind shield member (90), slits (93) radially extending from an inner end portion in the radial direction are formed to be lined up in the circumferential direction of the insertion hole (52).

10. The yarn heater (5) according to any one of claims 1 to 9, wherein, the fan (44) is attached to the drive shaft (41) of the motor (40).

11. The yarn heater (5) according to any one of claims 1 to 10, wherein, the motor (40) includes:
a motor housing (42); and
a cover (43) which covers a peripheral surface (47a) of the motor housing (42) and guides the cooling wind along the peripheral surface of the motor housing (42), so that the cooling wind flows through the gap between the motor housing (42) and the cover (43) so as to cool the motor housing (42) and is diverted outward in the radial direction of the motor (40).

12. The yarn heater (5) according to claim 11 wherein the fan (44) is provided outside the motor housing (42) and on a side opposite to the leading end of the drive shaft (41) in the direction of the drive shaft (41) of the motor (40).

13. A spun yarn drawing apparatus (3) comprising, as heating rollers (5) configured to heat yarns (Y):
a low-speed roller (21, 22, 23); and
a high-speed roller (24, 25) which is provided downstream of the low-speed roller (21, 22, 23) in a yarn running direction and rotates at a higher speed than the low-speed roller (21, 22, 23),
the spun yarn drawing apparatus (3) drawing yarns (Y) between the low-speed roller (21, 22, 23) and the high-speed roller (24, 25), and
the spun yarn drawing apparatus (3) further comprising the yarn heater (5) according to any one of claims 1 to 12, as a yarn heater (5) including at least the high-speed roller (24, 25).

## Patentansprüche

1. Garnheizer (5), umfassend:
eine Heizwalze (20), die einen Walzengrundkörper (31) beinhaltet, und ein Heizelement (32), das in dem Walzengrundkörper (31) bereitgestellt ist, um den Walzengrundkörper (31) zu erwärmen, und die konfiguriert ist, Garn (Y) zu erwärmen;
einen Motor (40), der konfiguriert ist, die Heizwalze (20) drehend anzutreiben;
einen Lüfter (44), der sich dreht, um kühlenden Wind zum Kühlen des Motors (40) zu erzeugen; und
ein Windschutzelement (80, 90), das einen Luftstrom, der in Übereinstimmung mit Erzeugung des kühlenden Winds erzeugt ist, daran hindert, zu der Heizwalze (20) zu strömen;
wobei
die Heizwalze (20) mit dem Motor (40) in einer Richtung einer Antriebswelle (41) des Motors (40) ausgerichtet und an dem Motor (40) befestigt ist,
der Lüfter (44) den kühlenden Wind erzeugt, der von der Seite des Motors (40) zu der Seite der Heizwalze (20) in der Richtung der Antriebswelle (41) strömt,
das Windschutzelement (80, 90) zwischen dem Lüfter (44) und der Heizwalze (20) in der Richtung der Antriebswelle (41) bereitgestellt ist, um den Strom des kühlenden Winds zu blockieren, nachdem der kühlende Wind den Motor (40) gekühlt hat,
der Motor (40) an einen Motormontageabschnitt (50) befestigt ist, in dem ein Einsatzloch (52), in das der Motor (40) eingesetzt ist, gebildet ist,
der Lüfter (44) und die Heizwalze (20) einander über den Motormontageabschnitt (50) gegenüberliegen und
ein erster Spalt (71) zwischen dem Motor (40) und der Innenumfangsfläche (53) des Einsatzlochs (52) gebildet ist, wobei der Garnheizer **dadurch gekennzeichnet ist, dass**
das Windschutzelement (80, 90) bereitgestellt ist, um den ersten Spalt (71) zu schließen.

2. Garnheizer (5) nach Anspruch 1, wobei
der Motormontageabschnitt (50) eine Befestigungsplatte (51) beinhaltet, in der das Einsatzloch (52) gebildet ist,
ein Befestigungsflansch (60) zwischen der Befestigungsplatte (51) und der Heizwalze (20) in der Richtung der Antriebswelle (41) bereitgestellt ist und an der Befestigungsplatte (51) befestigt ist und
der Motor (40) an der Befestigungsplatte (51) mittels des Befestigungsflansches (60) befestigt ist.

3. Garnheizer (5) nach Anspruch 2, wobei
der Motor (40) an den Befestigungsflansch (60) mit einem Anti-Schwingungselement (67) befestigt ist, das zwischen den Motor (40) und den Befestigungsflansch (60) eingelegt ist.

4. Garnheizer (5) nach Anspruch 3, wobei
der Motor (40) mit dem Befestigungsflansch (60) über ein Verbindungswerkzeug (66) verbunden ist, das den Befestigungsflansch (60) in der Richtung der Antriebswelle (41) durchdringt, und
das Anti-Schwingungselement (67) zwischen dem Motor (40) und dem Befestigungsflansch (60) in der Richtung der Antriebswelle (41) eingelegt ist.

5. Garnheizer (5) nach Anspruch 4, wobei
ein Durchlassloch (65) in dem Befestigungsflansch (60) gebildet ist, um den Befestigungsflansch (60) in der Richtung der Antriebswelle (41) zu durchdringen,
der Motor (40) beinhaltet
einen Heizelementmontageabschnitt (48), der in das Durchlassloch (65) eingesetzt ist, wobei das Heizelement (32) der Heizwalze (20) an dem Heizelementmontageabschnitt (48) befestigt ist, und
ein zweiter Spalt (72) zwischen der Innenumfangsfläche (64) des Durchlasslochs (65) und dem Heizelementmontageabschnitt (48) gebildet ist.

6. Garnheizer (5) nach einem der Ansprüche 1 bis 5, wobei das Windschutzelement (80, 90) über dem gesamten Umfang des Einsatzlochs (52) bereitgestellt ist.

7. Garnheizer (5) nach Anspruch 6, wobei das Windschutzelement (80) in mehrere Stücke in der Umfangsrichtung des Einsatzlochs (52) teilbar ist.

8. Garnheizer (5) nach einem der Ansprüche 1 bis 5, wobei
das Windschutzelement (90) an dem Motormontageabschnitt (50) befestigt ist und geformt ist, sich in einer radialen Richtung des Einsatzlochs (52) von dem gesamten Umfang des Einsatzlochs (52) nach innen zu erstrecken,
der Innendurchmesser des Windschutzelements (90) kürzer als der Außendurchmesser des Motors (40) ist und
das Windschutzelement (90) ein elastisches Element ist, in dem ein Abschnitt innerhalb des Einsatzlochs (52) in der Achsrichtung des Einsatzlochs (52) verdreht ist, wenn der Motor in das Einsatzloch (52) eingesetzt ist, wobei das elastische Element den ersten Spalt (71) schließt, wenn der Motor (40) an dem Motormontageabschnitt (50) befestigt ist.

9. Garnheizer (5) nach Anspruch 8, wobei in dem Windschutzelement (90) Schlitze (93), die sich radial von einem Innenendabschnitt in der radialen Richtung erstrecken, gebildet sind, in der Umfangsrichtung des Einsatzlochs (52) aufgereiht zu sein.

10. Garnheizer (5) nach einem der Ansprüche 1 bis 9, wobei der Lüfter (44) an der Antriebswelle (41) des Motors (40) befestigt ist.

11. Garnheizer (5) nach einem der Ansprüche 1 bis 10, wobei der Motor (40) beinhaltet:
ein Motorgehäuse (42); und
eine Abdeckung (43), die eine Umfangsfläche (47a) des Motorgehäuses (42) abdeckt und den kühlenden Wind entlang der Umfangsfläche des Motorgehäuses (42) führt, sodass der kühlende Wind durch den Spalt zwischen dem Motorgehäuse (42) und der Abdeckung (43) strömt, um das Motorgehäuse (42) zu kühlen, und nach außen in der radialen Richtung des Motors (40) abgelenkt ist.

12. Garnheizer (5) nach Anspruch 11, wobei der Lüfter (44) außerhalb des Motorgehäuses (42) und an einer Seite gegenüber des Vorderendes der Antriebswelle (41) in der Richtung der Antriebswelle (41) des Motors (40) bereitgestellt ist.

13. Spinngarnzieheinrichtung (3), umfassend als Heizwalzen (5), die konfiguriert sind, Garn (Y) zu erwärmen:
eine Niedergeschwindigkeitswalze (21, 22, 23); und
eine Hochgeschwindigkeitswalze (24, 25), die stromabwärts der Niedergeschwindigkeitswalze (21, 22, 23) in einer Garnlaufrichtung bereitgestellt ist und sich bei einer höheren Geschwindigkeit als die Niedergeschwindigkeitswalze (21, 22, 23) dreht,
wobei die Spinngarnzieheinrichtung (3) Garn (Y) zwischen der Niedergeschwindigkeitswalze (21, 22, 23) und der Hochgeschwindigkeitswalze (24, 25) zieht und
die Spinngarnzieheinrichtung (3) weiter den Garnheizer (5) gemäß einem der Ansprüche 1 bis 12 als einen Garnheizer (5) umfasst, der mindestens die Hochgeschwindigkeitswalze (24, 25) beinhaltet.

## Revendications

1. Dispositif de chauffage de fil (5) comprenant :
un rouleau chauffant (20) qui inclut un corps principal de rouleau (31) et un dispositif de chauffage (32) prévu dans le corps principal de rouleau (31) pour chauffer le corps principal de rouleau (31), et qui est configuré pour chauffer des fils (Y) ;
un moteur (40) qui est configuré pour entraîner en rotation le rouleau chauffant (20) ;
un ventilateur (44) qui tourne de manière à générer un vent de refroidissement pour refroidir le moteur (40) ; et
un élément pare-vent (80, 90) qui empêche un écoulement d'air généré conformément à la génération du vent de refroidissement de s'écouler vers le rouleau chauffant (20) ;
dans lequel,
le rouleau chauffant (20) est aligné avec le moteur (40) dans la direction d'un arbre d'entraînement (41) du moteur (40) et est fixé au moteur (40),
le ventilateur (44) génère le vent de refroidissement qui s'écoule du côté du moteur (40) vers le côté du rouleau chauffant (20) dans la direction de l'arbre d'entraînement (41),
l'élément pare-vent (80, 90) est prévu entre le ventilateur (44) et le rouleau chauffant (20) dans la direction de l'arbre d'entraînement (41) pour bloquer l'écoulement du vent de refroidissement après que le vent de refroidissement a refroidi le moteur (40),
le moteur (40) est fixé à une partie de montage de moteur (50) dans laquelle un trou d'insertion (52) dans lequel le moteur (40) est inséré est formé,
le ventilateur (44) et le rouleau chauffant (20) s'opposent l'un l'autre à travers la partie de montage de moteur (50), et
un premier espace (71) est formé entre le moteur (40) et la surface circonférentielle intérieure (53) du trou d'insertion (52), le dispositif de chauffage de fil étant **caractérisé en ce que**
l'élément pare-vent (80, 90) est prévu pour fermer le premier espace (71).

2. Dispositif de chauffage de fil (5) selon la revendication 1, dans lequel,
la partie de montage de moteur (50) inclut une plaque de fixation (51) dans laquelle le trou d'insertion (52) est formé,
une bride de fixation (60) est prévue entre la plaque de fixation (51) et le rouleau chauffant (20) dans la direction de l'arbre d'entraînement (41) et est fixée à la plaque de fixation (51), et
le moteur (40) est fixé à la plaque de fixation (51) via la bride de fixation (60).

3. Dispositif de chauffage de fil (5) selon la revendication 2, dans lequel le moteur (40) est fixé à la bride de fixation (60) avec un élément anti-vibration (67) interposé entre le moteur (40) et la bride de fixation (60).

4. Dispositif de chauffage de fil (5) selon la revendication 3, dans lequel,
le moteur (40) est connecté à la bride de fixation (60) via un outil de connexion (66) qui pénètre dans la bride de fixation (60) dans la direction de l'arbre d'entraînement (41), et
l'élément anti-vibration (67) est interposé entre le moteur (40) et la bride de fixation (60) dans la direction de l'arbre d'entraînement (41).

5. Dispositif de chauffage de fil (5) selon la revendication 4, dans lequel,
un trou traversant (65) est formé dans la bride de fixation (60) pour pénétrer la bride de fixation (60) dans la direction de l'arbre d'entraînement (41),
le moteur (40) inclut
une partie de montage de dispositif de chauffage (48) qui est insérée dans le trou traversant (65), le dispositif de chauffage (32) du rouleau chauffant (20) étant fixé à la partie de montage de dispositif de chauffage (48), et
un second espace (72) est formé entre la surface circonférentielle intérieure (64) du trou traversant (65) et la partie de montage du dispositif de chauffage (48).

6. Dispositif de chauffage de fil (5) selon l'une quelconque des revendications 1 à 5, dans lequel l'élément pare-vent (80, 90) est prévu sur toute la circonférence du trou d'insertion (52).

7. Dispositif de chauffage de fil (5) selon la revendication 6, dans lequel l'élément pare-vent (80) peut être divisé en plusieurs pièces dans la direction circonférentielle du trou d'insertion (52).

8. Dispositif de chauffage de fil (5) selon l'une quelconque des revendications 1 à 5, dans lequel,
l'élément de pare-vent (90) est fixé à la partie de montage de moteur (50), et est mis en forme pour s'étendre vers l'intérieur dans une direction radiale du trou d'insertion (52) à partir de toute la circonférence du trou d'insertion (52),
le diamètre intérieur de l'élément pare-vent (90) est plus court que le diamètre extérieur du moteur (40), et
l'élément pare-vent (90) est un élément élastique dans lequel une partie à l'intérieur du trou d'insertion (52) est déformée dans la direction axiale du trou d'insertion (52) lorsque le moteur est inséré dans le trou d'insertion (52), l'élément élastique fermant le premier espace (71) lorsque le moteur (40) est fixé à la partie de montage de moteur (50).

9. Dispositif de chauffage de fil (5) selon la revendication 8, dans lequel, dans l'élément pare-vent (90), des fentes (93) s'étendant radialement depuis une partie d'extrémité intérieure dans la direction radiale sont formées pour être alignées dans la direction circonférentielle du trou d'insertion (52).

10. Dispositif de chauffage de fil (5) selon l'une quelconque des revendications 1 à 9, dans lequel le ventilateur (44) est fixé à l'arbre d'entraînement (41) du moteur (40).

11. Dispositif de chauffage de fil (5) selon l'une quelconque des revendications 1 à 10, dans lequel le moteur (40) inclut :
un boîtier de moteur (42) ; et
un couvercle (43) qui recouvre une surface périphérique (47a) du boîtier de moteur (42) et guide le vent de refroidissement le long de la surface périphérique du boîtier de moteur (42), de telle sorte que le vent de refroidissement s'écoule à travers l'espace entre le boîtier de moteur (42) et le couvercle (43) de manière à refroidir le boîtier de moteur (42) et est dévié vers l'extérieur dans la direction radiale du moteur (40).

12. Dispositif de chauffage de fil (5) selon la revendication 11, dans lequel le ventilateur (44) est prévu à l'extérieur du boîtier de moteur (42) et sur un côté opposé à l'extrémité avant de l'arbre d'entraînement (41) dans la direction de l'arbre d'entraînement (41) du moteur (40).

13. Appareil d'étirage de filé (3) comprenant, en tant que rouleaux chauffants (5) configurés pour chauffer des fils (Y) :
un rouleau à faible vitesse (21, 22, 23) ; et
un rouleau à grande vitesse (24, 25) qui est prévu en aval du rouleau à faible vitesse (21, 22, 23) dans une direction de défilement de fil et tourne à une vitesse plus élevée que le rouleau à faible vitesse (21, 22, 23),
l'appareil d'étirage de filé (3) étirant des fils (Y) entre le rouleau à faible vitesse (21, 22, 23) et le rouleau à grande vitesse (24, 25), et
l'appareil d'étirage de filé (3) comprenant en outre le dispositif de chauffage de fil (5) selon l'une quelconque des revendications 1 à 12, en tant que dispositif de chauffage de fil (5) incluant au moins le rouleau à grande vitesse (24, 25).
